# EUROPÄISCHE PATENTANMELDUNG

(11) **EP 4 752 196 A1**
(43) Veröffentlichungstag der Anmeldung: **03.06.2026**
(21) Anmeldenummer: 24216868.0
(22) Anmeldetag: 02.12.2024
(51) Int. Cl.: C10L 5/44, C10L 5/46, C10L 9/08, C05F 9/00, C05F 9/02, C05G 3/80, C09K 17/00, C01B 32/05, C10B 53/08, B09B 3/40

(54) **VERFAHREN UND ANLAGE ZUR HERSTELLUNG VON PFLANZENKOHLE AUS MIT SPEISERESTEN BEHAFTETEM EINWEGMATERIAL AUS NACHWACHSENDEN ROHSTOFFEN**

(71) Anmelder: Papstar GmbH, 53925 Kall (DE)
(72) Erfinder: KOLVENBACH, Frank, 53894 Mechernich (DE); KÖLLER, Andreas, 53937 Schleiden (DE); BÖTTCHER, Joachim, 67822 Sankt Alban (DE)
(74) Vertreter: Patentanwälte Dr. Keller, Schwertfeger Partnerschaft mbB

(57) **Zusammenfassung**

Die vorliegende Erfindung betrifft ein Verfahren und eine Anlage zur Herstellung von Pflanzenkohle und Energie aus mit Speiseresten behaftetem Einwegmaterial, das aus nachwachsenden Rohstoffen hergestellt wurde. Das Verfahren sieht eine Grobzerkleinerung und Trocknung des gesammelten Einwegmaterials, eine Feinzerkleinerung des grob zerkleinerten und getrockneten Einwegmaterials zum Erhalt von Material mit einer Korngröße von < 40 mm, ein Verpressen des fein zerkleinerten Materials zu Presslingen und schließlich eine thermische Umwandlung der Presslinge zu Pflanzenkohle durch Pyrolyse vor. Die Anlage umfasst eine Presseinrichtung zur Erzeugung von Presslingen aus dem fein zerkleinerten Material und eine Karbonisierungseinrichtung zur Erzeugung von Pflanzenkohle durch Pyrolyse.

## Beschreibung

Die vorliegende Erfindung betrifft ein Verfahren und eine Anlage zur Herstellung von Pflanzenkohle und Energie aus mit Speiseresten behaftetem Einwegmaterial, das aus nachwachsenden Rohstoffen hergestellt wurde.

Einweggeschirr und Bestecke aus nachwachsenden Rohstoffen werden als "Einwegmaterial" bezeichnet. Nachwachsende Rohstoffe sind Naturerzeugnisse, wie z. B. Holz, Zuckerrohr, Bambus, Weizen, Mais, Baumwolle, Flachs oder Hanf und stammen vorzugweise aus einem nachhaltigen Anbau. Nachwachsende Rohstoffe sind organische Rohstoffe, die aus landwirtschaftlicher, forstwirtschaftlicher und Fischerei-Produktion stammen und vom Menschen zielgerichtet für weiterführende Anwendungszwecke außerhalb des Nahrungs- und Futterbereiches verwendet werden. Produkte aus nachwachsenden Rohstoffen leisten einen wichtigen Beitrag zum Klima- und Umweltschutz. Gleichzeitig werden wertvolle Ressourcen geschont. Das aus den nachwachsenden Rohstoffen hergestellte nachhaltige Einwegmaterial kann beispielsweise für Events, Festivals oder Foodtrucks, Kantinen und Restaurants verwendet werden. Die meisten dieser Produkte können sowohl für warme als auch für kalte Speisen verwendet werden.

Zwar ist das nachhaltige Einwegmaterial grundsätzlich kompostierbar, allerdings besteht die Problematik, dass dieses nach dem Gebrauch mit Speiseresten kontaminiert ist und somit nach erfolgter Kompostierung nicht ohne weiteres auf landwirtschaftliche Flächen ausgebracht werden darf. Die Folge ist oft eine "Entsorgung" als Abfall oder Restmüll, was in keiner Weise im Sinne einer Kreislaufwirtschaft sein kann. Sollte dennoch eine Kompostierung im Sinne der Kreislaufwirtschaft erfolgen, ist der Kompostierungsprozess derart durchzuführen, dass für einen Zeitraum von mehreren Tagen im gesamten zu kompostierenden Material eine Temperatur von mindestens 55 °C eingehalten wird, um eine ausreichende Hygienisierung sicherzustellen. Um dies zu gewährleisten, muss das Material entweder technisch belüftet oder in regelmäßigen Abständen gewendet werden, damit ausreichend Sauerstoff in alle Prozesszonen gelangt. Diese Sauerstoffzufuhr fördert die Mineralisierung von Kohlenstoffverbindungen innerhalb der sogenannten Heißrottephase, wobei durch erhöhte mikrobiologische Aktivität Wärme freigesetzt wird, die wiederum eine Hygienisierung möglich macht. Erhebliche Nachteile dieser Methode sind einerseits der hohe Energiebedarf für die Belüftung und zweitens die hohe Mineralisierung von Kohlenstoff, welcher vorwiegend als klimaschädigendes CO2 freigesetzt wird. Gleichzeitig gehen mit der Mineralisierung erhebliche Mengen an Kohlenstoff, sowie Pflanzennährstoffe verloren, die der späteren landwirtschaftlichen Anwendung nicht mehr zur Verfügung stehen.

Eine Alternative zur Kompostierung im Sinne einer weiterführenden Kreislaufwirtschaft ist die Karbonisierung von mit Speiseresten kontaminiertem Einwegmaterial. Bei diesem Prozess wird das Material unter Luftabschluss bei Temperaturen über 500°C verschwelt. Hierbei entstehen Synthesegas und hochwertige Pflanzenkohle. Mit dem Synthesegas wird einerseits der Karbonisierungsprozess selbst energieautark betrieben und andererseits wird Überschusswärme zur Verfügung gestellt, die für unterschiedliche Wärmebedarfe, wie z.B. Trocknen, Heizen usw. zur Verfügung steht. Bei der Karbonisierung wird nur ein gewisser Anteil des zugeführten Kohlenstoffs in Form von Einwegmaterial in Synthesegas umgewandelt. Der andere Anteil wird in Pflanzenkohle verwandelt, welche aufgrund ihrer zahlreichen positiven Eigenschaften sowohl in der landwirtschaftlichen Anwendung als auch für viele andere Zwecke zum Einsatz kommt. Pflanzenkohle weist beispielsweise eine sehr große Oberfläche auf, welche die Wasserspeicherfähigkeit von Böden erhöht, die Nährstoffauswaschung reduziert und zugleich als Habitat für Bodenmikroorganismen zur Verfügung steht. Darüber hinaus ist Pflanzenkohle sehr stabil gegen biologischen Abbau und wird im Boden und sonstigen stofflichen Anwendungen kaum mineralisiert. Stattdessen bleibt sie Jahrhunderte bis Jahrtausende erhalten und speichert somit den enthaltenen Kohlenstoff sehr langfristig. Auf diese Weise entsteht eine effektive CO₂-Sequestrierung und ein messbarer Beitrag zum aktiven Klimaschutz. Bei einer Verrottung, Kompostierung oder Verbrennung des benutzten Einwegmaterials würde ein erheblicher Anteil des darin enthaltenen Kohlenstoffs in Form von CO₂ in die Atmosphäre emittiert. Die Kompostierung ist in dieser Hinsicht der Karbonisierung und damit der Gewinnung von Energie und Pflanzenkohle unterlegen.

Verfahren zur Verwertung von Lebensmitteln im Rahmen einer Karbonisierung sind bekannt. Um beispielweise Altbackwaren zu verwerten, beschreibt die DE 10 2016 111 673 A1 ein Verfahren zur Verwertung von Altbackwaren, die einer hydrothermalen Karbonisierung bei Temperaturen bis 260 °C als Einsatzmaterial zugeführt werden. Alternativ kann bei diesen niedrigen Temperaturen auch eine milde Pyrolyse durchgeführt werden, um eine Torrefizierung zu erreichen.

Die EP 0 324 668 A1 beschreibt eine Anlage zur Verarbeitung von Lebensmittelrückständen, bestehend aus einer Aufnahmezone, einer Selektionszone, einer Zerkleinerungszone und einer Wärmebehandlungszone. Die Anlage umfasst mehrere Reaktoren, um einen Umwandlungsprozess bei Temperaturen zwischen 400° und 600° C durchzuführen.

Die bekannten Verwertungskonzepte beschreiben somit keinen Weg zur Verwertung von Einwegmaterial, insbesondere gebrauchtem Einwegmaterial, um damit weiter verwendbare Pflanzenkohle und Energie herzustellen.

Aus diesem Grund ist es Aufgabe der vorliegenden Erfindung, ein Verfahren und eine Anlage zur Verwertung von mit Speiseresten behaftetem Einwegmaterial aus nachwachsenden Rohstoffen bereitzustellen.

Diese Aufgabe wird gelöst durch ein Verfahren mit den Merkmalen des Anspruchs 1 und einer Anlage zur Durchführung eines solchen Verfahrens.

Die vorliegende Erfindung stellt ein neuartiges Verfahren und eine Anlage zur Verwertung von Einwegmaterial, das mit Speiseresten behaftet ist und aus nachwachsenden Rohstoffen hergestellt wurde, zur Verfügung, um Pflanzenkohle herzustellen, die für verschiedene Anwendungsbereiche einsetzbar ist. Als Nebenprodukt entsteht Energie. Die mit dem erfindungsgemäßen Verfahren hergestellte Pflanzenkohle kann beispielsweise die Fruchtbarkeit und die Erträge von Böden steigern, wobei die Verwertung des Einwegmaterials gleichzeitig einen wichtigen Beitrag zum Klima-, Umwelt- und Ressourcenschutz liefert.

Das Ausgangsmaterial des erfindungsgemäßen Verfahrens ist Einwegmaterial, und insbesondere Einwegmaterial, das mit Speiseresten behaftet ist, also bereits gebrauchtes Einwegmaterial, wie Besteck oder Geschirr, wie es beispielsweise bei Festivals oder Events anfällt. Dort fallen in kurzer Zeit größere Mengen an, die gesammelt und anschließend zügig zur Annahme- und Aufbereitungsanlage transportiert werden können. Praktischerweise kann solches Einwegmaterial mit Papiersäcken gesammelt werden, die ebenfalls dem erfindungsgemäßen Verfahren zugeführt werden.

Der zweite Entstehungsweg von mit Speiseresten kontaminiertem Einwegmaterial umfasst Kantinen, Großküchen, Krankenhäuser, Altenheime, Schulen usw. An diesen Orten können sogenannte Biokonverter (d.h. automatische Schnellkomposter) fest aufgestellt werden, wodurch das anfallende mit Speiseresten kontaminierte Einwegmaterial zusammen mit Bioabfall eingebracht und vollautomatisch zerkleinert und getrocknet wird.

Insofern ist der Begriff "Einwegmaterial" sehr breit zu interpretieren und umfasst jegliches Material, das aus nachwachsenden Rohstoffen hergestellt ist. Üblicherweise besteht es jedoch aus Bestecken, Tellern, Schüsseln, Bechern, Tabletts, Tüchern oder ähnlichen Produkten und wurde konsequent aus nachwachsenden Rohstoffen, wie Holz, Frischfaser-Karton, Zuckerrohr, Bambus, Palmblatt, Mais oder auch Agrarresten hergestellt und ist somit biologisch abbau- und zersetzbar.

Das Einwegmaterial wird vorzugsweise am oder in der Nähe des Entstehungsortes für die weitere Verwertung gesammelt. In einer bevorzugten Variante wird das Einwegmaterial in einem Container gesammelt. Dieser wird dann zur Anlage gefahren, wo er dann entleert werden kann. Dies kann beispielsweise über einen Trichter oder Förderband erfolgen. Vorzugsweise handelt es sich bei dem Container um einen Schubbodencontainer, mit dem das Material ausgetragen werden kann.

Mit Speiseresten kontaminiertes Einwegmaterial ist häufig durchfeuchtet und hygienisch problematisch in der Verwertung, sodass es besonders entsorgt werden muss. Die erfindungsgemäßen Verfahrensschritte tragen dazu bei, dass ein hygienisch unbedenkliches Pflanzenkohleprodukt erhalten wird, das unmittelbar Anwendung in der Landwirtschaft, Forstwirtschaft oder im Gartenbau finden kann. Kernpunkt ist die Aufbereitung des gebrauchten Einwegmaterials durch dessen Grobzerkleinerung, Trocknung, Feinzerkleinerung und Brikettierung, um mit den so erhaltenen Briketts die sich anschließende Pyrolyse effizienter zu machen und ein hochwertiges Pflanzenkohleprodukt zu erhalten. Damit unterscheidet sich das erfindungsgemäße Verfahren von einer herkömmlichen hydrothermalen Karbonisierung, Verbrennung oder Kompostierung.

Das Verfahren umfasst in einem ersten Verfahrensschritt eine Grobzerkleinerung von gesammeltem Einwegmaterial. Die Grobzerkleinerung zerteilt das angelieferte Material auf Größen, welche die anschließende Trocknung effizienter machen. Zu fein zerkleinertes Material würde zu einem Verschmieren oder Verklumpen des Materials führen und damit die Trocknung schwieriger machen. Gänzlich ohne Zerkleinerung wiederum würde zu einem zu großen Volumen für den Trocknungsschritt führen. In der Praxis sollten daher Maximallängen von 100 bis 400 mm eines Teils des zerkleinerten Einwegmaterials nicht überschritten werden. Bevorzugt sind Durchmesser im Bereich 200 bis 250 mm. Die Grobzerkleinerung wird vorzugsweise mittels eines Zweiwellenzerkleinerers durchgeführt.

Anstelle eines Zweiwellenzerkleinerers können jedoch auch alternative Zerkleinerer oder Shredder zur Anwendung kommen, um das Einwegmaterial auf eine anlagengerechte Größe zu bringen.

Je nach Input-Material kann es notwendig sein, mögliche Störstoffe, z. B. Metallteile, Glasflaschen oder Steine vor der Bestückung des Grobzerkleinerers zu entfernen. So kann beispielsweise die Annahme- und Aufbereitungseinrichtung einen Magnetabscheider umfassen, um metallische Störstoffe zu entfernen. Auch eine Sortier- oder Filtereinrichtung kann angebracht werden, um nicht-metallische Störstoffe wie Glas oder Steine vor der Grobzerkleinerung zu entfernen. Die Bestückung des Grobzerkleinerers erfolgt vorzugsweise über einen Trichter oder Förderband, das direkt mit dem Input-Material beladen werden kann.

Nach der Grobzerkleinerung wird das grob zerkleinerte Einwegmaterial vorzugsweise über ein Förderband, beispielsweise ein Schrägförderband, einer Trocknungseinrichtung zugeführt. Vorzugsweise handelt es sich bei der Trocknungseinrichtung um einen Schubbodencontainer mit einem Lochblech als Boden. Durch die Löcher des Lochblechs strömt warme Luft nach oben durch das grobzerkleinerte Material. Die Abluft kann deutlich geruchsstark sein. Deshalb ist in einer bevorzugten Variante ein Luftfilter, vorzugsweise ein Biofilter für die Luftfilterung an der Trocknungseinrichtung vorgesehen. Die Trocknung des grob zerkleinerten Einwegmaterials erfolgt bis eine gewünschte Restfeuchte von vorzugsweise < 15 % erreicht wird. Diese Restfeuchte hat sich für die Herstellung der Presslinge und nachfolgenden Pyrolyse als vorteilhaft herausgestellt. Zwar müsste bereits getrocknetes Material nicht notwendigerweise diesen Trocknungsschritt durchlaufen, jedoch hat sich herausgestellt, dass die Feuchtigkeit in unterschiedlichen Chargen von Einwegmaterial sehr stark variieren kann, sodass die Restfeuchte des Gesamtgemisches dann häufig über 15 % lag.

Über ein weiteres Förderband oder sonstige Transporteinrichtung wird das getrocknete Einwegmaterial einem Feinzerkleinerer zugeführt, wo eine Feinzerkleinerung des grob zerkleinerten und getrockneten Einwegmaterials erfolgt. Die Feinzerkleinerung ist erforderlich, um das Material auf eine gewünschte Korngröße für die anschließende Herstellung von Presslingen zu bringen. Wünschenswert sind Korngrößen < 40 mm, vorzugsweise < 30 mm, was vom jeweiligen Anlagenaufbau abhängt. Bevorzugt sind Korngrößen zwischen 0,01 mm und 20 mm in Längserstreckung, mehr bevorzugt zwischen 5 mm und 15 mm, vorzugsweise etwa 10 mm. Die Korngrößen tragen zur optimalen Herstellung und Qualität der Presslinge bei.

In bestimmten Ausführungsformen kann es auch vorgesehen sein, dass die Grobzerkleinerung und die Feinzerkleinerung in einem Verfahrensschritt durchgeführt werden, falls der Trocknungsschritt zeitlich kurzgehalten werden kann oder entfallen sollte.

In einer alternativen Ausführungsform können die Schritte der Grobzerkleinerung, Trocknung und die Feinzerkleinerung in einem Biokonverter durchgeführt werden. Das daraus gewonnene Material kann direkt zur Herstellung von Presslingen und spätere Karbonisierung verwendet werden.

Das fein zerkleinerte Material wird anschließend zu Presslingen verpresst. Bei den Presslingen kann es sich vorzugsweise um Briketts oder Pellets handeln. Die Verpressung des fein zerkleinerten Materials erfolgt demnach entweder durch Brikettierung oder alternativ durch Pelletierung. Die Briketts oder Pellets stellen das Input-Material für die sich anschließende Karbonisierung durch Pyrolyse dar.

Schließlich erfolgt die thermische Umwandlung der Presslinge zu Pflanzenkohle durch Pyrolyse. Die Pyrolyse wird vorzugweise bei Temperaturen zwischen 350 °C und 1000 °C unter Sauerstoffdefizit durchgeführt. Die Herstellung von Presslingen verbessert nicht nur die Lagerfähigkeit und Lagerkapazität und beseitigt die Strukturnachteile des Einwegmaterials, sondern lässt auch die Pyrolyse effizienter ablaufen, da eine optimale Struktur und Energiedichte für die Karbonisierung gegeben ist.

Nach der thermischen Umwandlung der Presslinge zu Pflanzenkohle durch Pyrolyse kann die Pflanzenkohle für die weiteren Anwendungen eingesetzt werden. Für die Verwendung als Bodenverbesserer kann es wünschenswert sein, dass die nach der Pyrolyse erhaltene Pflanzenkohle durch Zugabe von Mikroorganismen biologisch aktiviert wird. Hierbei wird vorzugsweise eine Milchsäure zugeführt, um Pflanzennährstoffe, Spurenelemente, organische Säuren oder Vitamine an den Strukturen der Pflanzenkohle zu mobilisieren und damit langfristig pflanzenverfügbar zu machen. Die Bindung von Nährstoffen und die Kapazität zur Speicherung von Wasser sind hervorragende Eigenschaften, wodurch die durch das erfindungsgemäße Verfahren hergestellte Pflanzenkohle deutliche Vorteile gegenüber gewöhnlichen Bodenverbesserern aufweist. Deshalb ist in einer bevorzugten Variante auch vorgesehen, dass die aus der Pyrolyse erhaltene Pflanzenkohle mit einer Nährstoff-haltigen Lösung beladen wird. Dadurch bleibt beispielsweise Nitrat deutlich stabiler und länger in den Kohleporen gespeichert. Diese starke Interaktion von Nitrat und Pflanzenkohle und damit die langsame Freisetzung von Nitrat in den Boden sind gewünschte Eigenschaften, denn so kann mit nur einer Düngergabe das Pflanzenwachstum gefördert und gleichzeitig die Auswaschung von Nitrat ins Grundwasser minimiert werden.

Die vorliegende Erfindung betrifft auch eine Anlage zur Herstellung von Pflanzenkohle aus mit Speiseresten behaftetem Einwegmaterial, das aus nachwachsenden Rohstoffen hergestellt wurde, umfassend einen Grobzerkleinerer zur Aufnahme und Zerkleinerung von gesammeltem Einwegmaterial, eine Trocknungseinrichtung zum Reduzieren des Feuchtigkeitsgehalts des zerkleinerten Einwegmaterials auf eine Restfeuchte von < 15 %, einen Feinzerkleinerer für das grob zerkleinerte und getrocknete Material zum Erhalt einer Korngröße von < 40 mm, eine Presseinrichtung zur Erzeugung von Presslingen aus dem fein zerkleinerten Material sowie eine Pyrolyseeinrichtung (Karbonisierungseinrichtung) zur Erzeugung von Pflanzenkohle durch Karbonisierung (Pyrolyse) des Input-Materials (Briketts). Gleichzeitig wird mit der Anlage auch Energie erzeugt.

Bei dem Grobzerkleinerer handelt es sich vorzugsweise um einen Zweiwellenzerkleinerer. Dieser kann in einer bevorzugten Variante über ein Förderband bestückt werden, das mit einem Überbandmagneten zur Entfernung von metallischen Störstoffen ausgestattet ist. Bei der Trocknungseinrichtung handelt es sich vorzugsweise um einen SchubbodenTrocknungscontainer, der wahlweise mit einem Lochblechboden ausgestattet ist, um Warmluft von unten in den Hohlraum über den Lochblechboden einzublasen. Die Warmluft strömt bei dieser bevorzugten Ausführungsvariante durch den Lochblechboden vertikal von unten nach oben durch die zu trocknenden Schüttgüter. Die Materialien werden vorzugsweise mittels Schubboden horizontal in Längsrichtung des Containers vom Einfülltrichter zur Austragsöffnung befördert. In einer bevorzugten Variante ist der Trocknungscontainer zusätzlich mit einem großflächigen Biofilter ausgerüstet, wodurch überschüssige Luft aus dem Trockner direkt durch das organische Filtermaterial des Biofilters befördert und biologisch gereinigt wird. Der Trocknungscontainer kann entweder über einen Einfülltrichter oder mittels Förderbands befüllt werden.

Bei dem Feinzerkleinerer handelt es sich vorzugsweise um einen Einwellenzerkleinerer mit Sieblöchern mit einem Durchmesser von < 40 mm, vorzugsweise zwischen 5 und 25 mm, bevorzugt < 15 mm, mehr bevorzugt etwa 10 mm. Auch hier kann es wünschenswert sein, den Eintrag des Materials über einen Einfülltrichter umzusetzen.

Die Brikettierung erfolgt vorzugsweise in einer Brikettierpresse, welche über einen großvolumigen Vorratsbehälter verfügt. Ein Füllsensor kontrolliert die Materialzufuhr. Die mittels der Presseinrichtung entstandenen Presslinge, vorzugsweise Briketts, werden vorzugsweise einer Bigbag-Abfülleinrichtung zur Bigbag-Abfüllung zugeführt. Diese können entweder eine Zeit lang gelagert oder direkt der Pyrolyseeinrichtung für die Karbonisierung zugeführt werden. Natürlich können die Presslinge in alternativen Ausführungsvarianten auch direkt pyrolysiert werden. Bei der Karbonisierungseinrichtung handelt es sich vorzugsweise um einen Drehrohrofen, Durchlaufreaktor oder Meiler.

Einwegmaterial fällt häufig in Kantinen, Großküchen, Krankenhäusern, Altenheimen, Schulen und anderen Einrichtungen an. Hier können Biokonverter zur Umsetzung von Einwegmaterial aufgestellt werden. Bevorzugte Biokonverter und die darin ablaufenden Verfahren umfassen eine Animpfung zersetzender Mikroorganismen und eine optimale Temperatur- und Feuchtigkeitsführung. Innerhalb des Biokonverters befindet sich vorzugsweise eine rotierende Achse, die das Material permanent umwälzt und vermischt. Auf diese Weise wird das eingebrachte Einwegmaterial sowie der eingebrachte Bioabfall bereits in wenigen Tagen zersetzt. Die leicht abbaubare Organik wird verstoffwechselt. Übrig bleibt ein faseriges, Zellulose- und Lignin-haltiges und relativ trockenes Material, welches sich sehr gut für eine Pelletierung/Brikettierung und nachfolgende Karbonisierung eignet. Das anfallende Material kann von den entsprechenden Einrichtungen in regelmäßigen Abständen eingesammelt und zur Annahme- und Aufbereitungsstation transportiert werden. Da das Material bereits im Rahmen der Vorbehandlung im Biokonverter zerkleinert und getrocknet worden ist, müssen die Verfahrensschritte der Trocknung und Zerkleinerung in der Regel nicht nochmals durchgeführt werden. Das Material muss im weiteren Verlauf zur Herstellung von Presslingen verdichtet werden, um so effektiv karbonisiert zu werden. Dies kann in einer Variante beispielsweise in einer dafür ausgelegten Annahme- und Aufbereitungsanlage erfolgen. Das Input-Material für die Herstellung der Presslinge wäre demnach bereits im Biokonverter umgewandeltes Fasermaterial.

In einer bevorzugten Ausführungsvariante ist vor der Presseinrichtung ein Biokonverter vorgesehen, der den Grobzerkleinerer, die Trocknungseinrichtung und den Feinzerkleinerer ersetzt, da diese Verfahrensschritte bereits darin ablaufen.

Die Erfindung wird in den nachfolgenden Zeichnungen näher erläutert. Es zeigen:
- Fig. 1:: ein Ablaufschema des erfindungsgemäßen Verfahrens mit den Anlagenbestandteilen zur Grobzerkleinerung, Trocknung, Feinzerkleinerung, Brikettierung und Karbonisierung.
- Fig. 2:: eine Ausführungsvariante der erfindungsgemäßen Anlage zur Herstellung von Pflanzenkohle aus Einwegmaterial in Seitendarstellung (oben) und Draufsicht (unten).

Die folgende Erfindung ist selbstverständlich nicht auf die in den Abbildungen gezeigten Ausführungsvarianten beschränkt. Die Erfindung umfasst ferner auch eine Kombination von Merkmalen oder Anlagenbestandteilen oder Teilen davon.

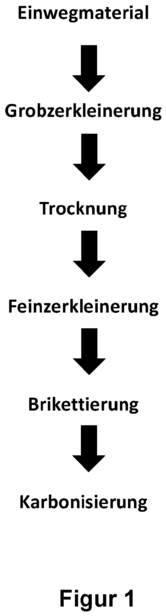

In Fig. 1 ist das Ablaufschema des erfindungsgemäßen Verfahrens gezeigt. Die einzelnen Stufen sind aufeinander abgestimmt, so dass ein optimales Ergebnis für die darauffolgende Verfahrensstufe erzielt werden kann. Die Grobzerkleinerung bereitet eine effiziente Trocknung in der Trocknungsstufe vor. Die Feinzerkleinerung ist für das Erreichen einer angestrebten Dichte für die Brikettierung erforderlich und die Brikettierung liefert aufgrund der hohen Dichte der Presslinge ein hervorragendes Ergebnis bei der sich anschließenden Karbonisierung.

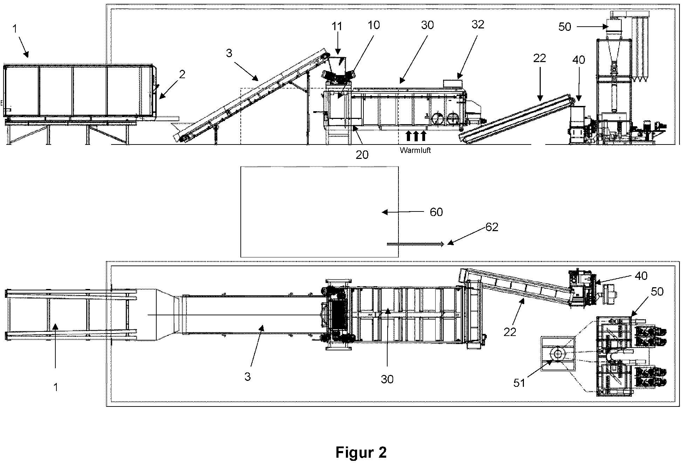

In Fig. 2 ist eine bevorzugte Ausführungsvariante des erfindungsgemäßen Verfahrens und Anlage gezeigt. In einer Sammelstation wird mit Speiseresten kontaminiertes Einwegmaterial in einem Schubbodencontainer 1 gesammelt. Dies kann beispielsweise in Papiersäcken erfolgen, die ebenfalls als Einwegmaterial dienen. Das Einwegmaterial umfasst in der Regel aus nachwachsenden Rohstoffen hergestellte Teller, Bestecke, Becher oder ähnliches Material und ist häufig mit Speiseresten oder Getränkeresten behaftet.

Vom Schubbodencontainer 1 gelangt das Material über eine Klappe 2 auf ein Förderband 3. Über die Geschwindigkeit des Förderbandes 3 des Containers 1 und die Öffnungsweite der Klappe 2 ist es möglich, die Fördermenge des Einwegmaterials zum nachfolgenden Grobzerkleinerer 10 festzulegen. Das Förderband 3 kann optional mit einem Überbandmagneten zur Entfernung von metallischen Störstoffen ausgestattet sein.

Das Einwegmaterial gelangt dann über einen Trichter 11 in einen Grobzerkleinerer 10, hier gezeigt als Zweiwellenzerkleinerer. Über ein Förderband 20 gelangt das grob zerkleinerte Material in eine Trocknungseinrichtung 30, hier ausgeführt als Schubbodentrocknungscontainer. In der Trocknungseinrichtung 30 wird Warmluft von unten durch ein Lochblech über das grob zerkleinerte Material geleitet, bis die Restfeuchte < 15 % beträgt. Zusätzlich sorgt ein Biofilter 32 für die Reinigung der Abluft. Für eine großtechnische Karbonisierung sind Korngrößenstrukturen < 30 mm wünschenswert. Um diese zu erhalten, wird das vorzerkleinerte Material über ein Schrägband 22 einem Feinzerkleinerer 40, hier dargestellt als Einwellenzerkleinerer, zugeführt. Der Einwellenzerkleinerer (Feinzerkleinerer 40) bringt das grob zerkleinerte und vorgetrocknete Material auf die für die Brikettierung gewünschte Korngröße von maximal 15 mm. Eine hydraulisch gesteuerte Andrückeinheit führt das zerkleinerte Material dem Schneidbereich des Rotors zu und wird dabei automatisch und lastabhängig gesteuert. Der Einwellenzerkleinerer besitzt in der gezeigten Variante einen Rotor aus gehärtetem Stahl, welcher mit den Messern einen Durchmesser von ca. 250 mm aufweist. Der Rotor arbeitet vorzugsweise mit einer Drehzahl von ca. 100 U/min. Die Messer sind vorzugsweise konkav geschliffen, um den gewünschten Zermahlgrad zu erreichen. In der gezeigten Variante werden 4-fach drehbare Messer oder Wendeschneidkronen eingesetzt. Diese befinden sich in eingefrästen Messertaschen auf speziellen Messerträgern. Damit wird eine hohe Durchsatzleistung bei geringem Energieverbrauch und ein optimaler Austrag des zerkleinerten Materials erreicht. Ein vorzugsweise vor dem Rotor montiertes, halbkreisförmiges Sieb bestimmt die Größe der Endfeinheit.

Die Restfeuchte des mit dem Einwellenzerkleinerer geschredderten Einwegmaterials lag bei mehreren Versuchen bei ca. 6 % und damit signifikant unterhalb der Anforderung für die Herstellung von Presslingen (< 15 %) und auch unterhalb der Anforderungen für eine Karbonisierung (< 20 bis 25 %). Der Trocknungsschritt kann durchaus optional sein, jedoch ist in der Praxis davon auszugehen, dass der Restfeuchtegehalt des Einwegmaterials stark schwankt. Insofern trägt der Trocknungsschritt dazu bei, dass das für die Karbonisierung bereitgestellte Material möglichst homogen und gleichmäßig trocken ist. Die maximale Restfeuchte von > 15 % ist dringend erforderlich, wenn aus dem zerkleinerten Einwegmaterial Presslinge hergestellt werden sollen.

Überraschenderweise wurde festgestellt, dass die Karbonisierung effizienter abläuft, wenn das Inputmaterial eine gewisse Schütt- und Rieselfähigkeit sowie Strukturstabilität aufbringt. Diese Eigenschaften werden erfindungsgemäß über eine Brikettierung erreicht, indem in einer Presseinrichtung 50 weitestgehend homogene Presslinge (Briketts) hergestellt werden. Das aus dem Feinzerkleinerer 40 erhaltene Material wird dazu der Presseinrichtung 50 zugeführt. Die Presseinrichtung 50 ist in der gezeigten Variante eine Brikettierpresse. Diese verfügt über einen großvolumigen Vorratsbehälter, welcher für eine Beschickung per Förderband vorbereitet ist. Die Brikettierpresse ist ferner mit einer Steuerung ausgestattet, damit ein vollautomatischer Produktionsablauf gewährleistet ist. Ein Füllsensor kontrolliert die Materialzufuhr. Das zu verpressende Material wird vom Rührwerk zum Schneckenschaft transportiert. Von dort gelangt es in den Pressraum des Hauptzylinders und wird daraufhin vom eigentlichen Hauptzylinder verarbeitet. Vorzugsweise besitzt der Hauptzylinder einen Durchmesser von ca. 30 mm, um eine optimale Struktur für die Karbonisierung zu erzeugen.

Von der Presseinrichtung 50 aus gelangen die Presslinge entweder zur Karbonisierungseinrichtung 60 (Pyrolyseofen) oder alternativ zur Bigbag-Abfüllung über eine Bigbag-Abfülleinrichtung 51. Die Bigbags können gelagert, transportiert und später in der Karbonisierungseinrichtung 60 pyrolysiert werden. Die Abfuhr warmer Luft in der Karbonisierungseinrichtung 60 erfolgt über eine Abluftleitung 62. Die Warmluft der Abluftleitung 62 wird vorzugsweise für die Trocknung des Materials in der Trocknungseinrichtung 30 verwendet.

Das so erhaltene Pflanzenkohle-Material wurde hinsichtlich der Zusammensetzung der Eigenschaften näher analysiert. Sämtliche EBC-Grenzwerte für "EBC-Agro" wurden eingehalten. Die Ergebnisse der Analyse sind in der nachfolgenden Tabelle gezeigt.

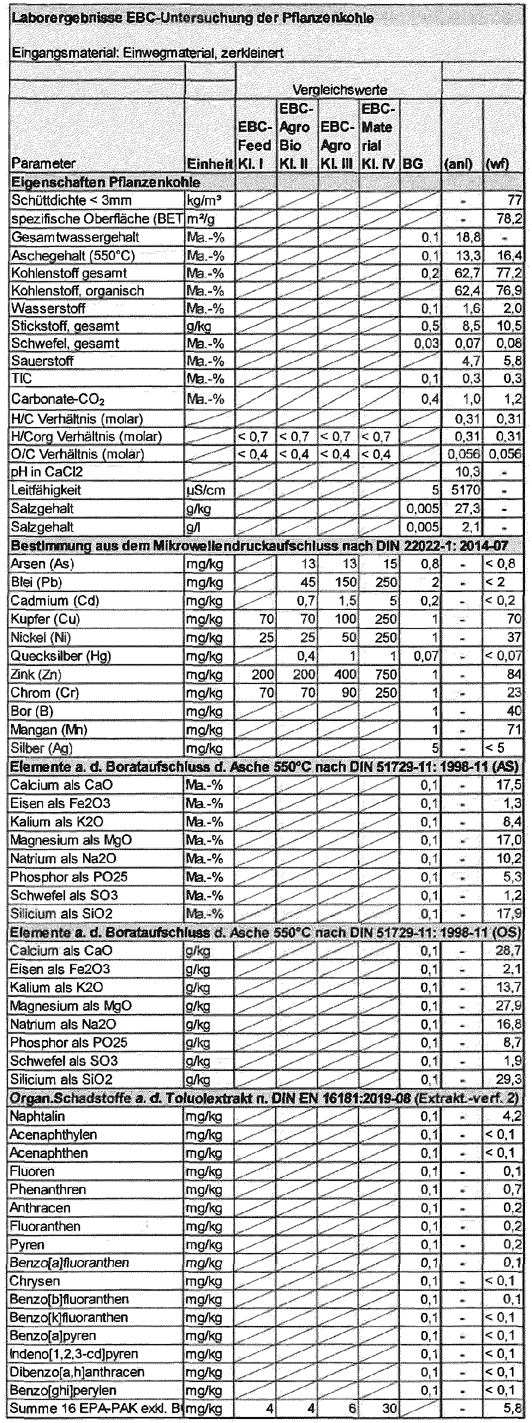

## Patentansprüche

1. Verfahren zur Herstellung von Pflanzenkohle aus mit Speiseresten behaftetem Einwegmaterial, das aus nachwachsenden Rohstoffen hergestellt wurde, umfassend die Schritte:
- Grobzerkleinerung von gesammeltem Einwegmaterial,
- Trocknung des grob zerkleinerten Einwegmaterials bis eine gewünschte Restfeuchte erreicht wird,
- Feinzerkleinerung des grob zerkleinerten und getrockneten Einwegmaterials zum Erhalt von Material mit einer Korngröße von < 40 mm,
- Verpressen des fein zerkleinerten Materials zu Presslingen,
- Thermische Umwandlung der Presslinge zu Pflanzenkohle durch Pyrolyse.

2. Verfahren nach Anspruch 1, **dadurch gekennzeichnet, dass** die Trocknung des grob zerkleinerten Einwegmaterials so lange erfolgt, bis eine Restfeuchte von weniger als 15% erreicht wird.

3. Verfahren nach Anspruch 1 oder 2, **dadurch gekennzeichnet, dass** die Pyrolyse bei Temperaturen zwischen 350° und 1000° C unter Sauerstoffdefizit erfolgt.

4. Verfahren nach einem der Ansprüche 1 bis 3, **dadurch gekennzeichnet, dass** das Einwegmaterial aus nachwachsenden Rohstoffen ausgewählt aus Holz, Frischfaser-Karton, Zuckerrohr, Bambus, Palmblatt, Mais oder Agrarresten besteht und es sich bei dem Einwegmaterial um Bestecke, Teller, Schüssel, Becher, Tabletts oder Tücher oder ähnliche Produkte handelt.

5. Verfahren nach einem der Ansprüche 1 bis 4, **dadurch gekennzeichnet, dass** das im Verfahren eingesetzte Einwegmaterial über einen organischen Kohlenstoffgehalt von mehr als 40 % verfügt.

6. Verfahren nach einem der Ansprüche 1 bis 5, **dadurch gekennzeichnet, dass** die Verpressung des fein zerkleinerten Materials durch Brikettierung oder Pelletierung erfolgt und dass es sich bei den erhaltenen Presslingen um Briketts oder Pellets handelt.

7. Verfahren nach einem der Ansprüche 1 bis 6, **dadurch gekennzeichnet, dass** vor der Grobzerkleinerung eine Entfernung von Störstoffen, vorzugsweise mittels Magnetabscheidung, erfolgt.

8. Verfahren nach einem der Ansprüche 1 bis 7, **dadurch gekennzeichnet, dass** Überschusswärme aus der Pyrolyse zur Trocknung des grob zerkleinerten Einwegmaterials eingesetzt wird.

9. Verfahren nach einem der Ansprüche 1 bis 8, **dadurch gekennzeichnet, dass** die nach der Pyrolyse erhaltene Pflanzenkohle durch Zugabe von Mikroorganismen biologisch aktiviert wird, um Pflanzennährstoffe, Spurenelemente, organische Säuren oder Vitamine zu mobilisieren und langfristig pflanzenverfügbar zu machen.

10. Verfahren nach einem der Ansprüche 1 bis 9, **dadurch gekennzeichnet, dass** die aus der Pyrolyse erhaltene Pflanzenkohle mit einer Nährstoff-haltigen Lösung beladen wird.

11. Anlage zur Herstellung von Pflanzenkohle aus mit Speiseresten behaftetem Einwegmaterial, das aus nachwachsenden Rohstoffen hergestellt wurde, umfassend
- einen Grobzerkleinerer (10) zur Aufnahme und Zerkleinerung von gesammeltem Einwegmaterial,
- eine Trocknungseinrichtung (30) zum Reduzieren des Feuchtigkeitsgehalts des zerkleinerten Einwegmaterials,
- einen Feinzerkleinerer (40) für das grob zerkleinerte und getrocknete Material zum Erhalt einer Korngröße von < 40 mm,
- eine Presseinrichtung (50) zur Erzeugung von Presslingen aus dem fein zerkleinerten Material,
- eine Karbonisierungseinrichtung (60) zur Erzeugung von Pflanzenkohle durch Pyrolyse.

12. Anlage nach Anspruch 11, **dadurch gekennzeichnet, dass** es sich bei der Presseinrichtung (50) um eine Brikettierpresse zur Herstellung von Briketts handelt.

13. Anlage nach Anspruch 11 oder 12, **dadurch gekennzeichnet, dass** nach der Presseinrichtung (50) eine Bigbag-Abfülleinrichtung (51) zur Bigbag-Abfüllung der Presslinge folgt.

14. Anlage nach Anspruch 11 oder 13, **dadurch gekennzeichnet, dass** der Grobzerkleinerer (10) über ein Förderband (3) bestückt wird, das mit einem Überbandmagneten zur Entfernung von metallischen Störstoffen ausgestattet ist.

15. Anlage nach einem der Ansprüche 11 bis 14, **dadurch gekennzeichnet, dass** es sich bei
- dem Grobzerkleinerer (10) um einen Zweiwellenzerkleinerer, und/oder
- der Trocknungseinrichtung (30) um einen Schubboden-Trocknungs-Container, und/oder
- dem Feinzerkleinerer (40) um einen Einwellenzerkleinerer mit Sieblöchern mit einem Durchmesser von < 40 mm, vorzugsweise < 15 mm, für das fein zerkleinerte Material, und/oder
- der Karbonisierungseinrichtung (60) um einen Drehrohrofen, Durchlaufreaktor oder Meiler handelt.

16. Anlage nach einem der Ansprüche 11 bis 15, **dadurch gekennzeichnet, dass** vor der Presseinrichtung (50) ein Biokonverter vorgesehen ist, der den Grobzerkleinerer (10), die Trocknungseinrichtung (30) und den Feinzerkleinerer (40) ersetzt.

17. Anlage nach einem der Ansprüche 11 bis 16, **dadurch gekennzeichnet, dass** die Trocknungseinrichtung (30) einen Schubboden für den Materialtransport und einen Luftfilter umfasst.

## Geänderte Patentansprüche

### Geänderte Patentansprüche gemäss Regel 137(2) EPÜ.

1. Verfahren zur Herstellung von Pflanzenkohle aus mit Speiseresten behaftetem Einwegmaterial, das aus nachwachsenden Rohstoffen hergestellt wurde, umfassend die Schritte:
- Grobzerkleinerung von gesammeltem Einwegmaterial,
- Trocknung des grob zerkleinerten Einwegmaterials bis eine gewünschte Restfeuchte erreicht wird,
- Feinzerkleinerung des grob zerkleinerten und getrockneten Einwegmaterials zum Erhalt von Material mit einer Korngröße von < 40 mm,
- Verpressen des fein zerkleinerten Materials zu Presslingen,
- Thermische Umwandlung der Presslinge zu Pflanzenkohle durch Pyrolyse.

2. Verfahren nach Anspruch 1, **dadurch gekennzeichnet, dass** die Trocknung des grob zerkleinerten Einwegmaterials so lange erfolgt, bis eine Restfeuchte von weniger als 15% erreicht wird.

3. Verfahren nach Anspruch 1 oder 2, **dadurch gekennzeichnet, dass** die Pyrolyse bei Temperaturen zwischen 350° und 1000° C unter Sauerstoffdefizit erfolgt.

4. Verfahren nach einem der Ansprüche 1 bis 3, **dadurch gekennzeichnet, dass** das Einwegmaterial aus nachwachsenden Rohstoffen ausgewählt aus Holz, Frischfaser-Karton, Zuckerrohr, Bambus, Palmblatt, Mais oder Agrarresten oder anderen nachwachsenden Rohstoffen besteht und es sich bei dem Einwegmaterial um Bestecke, Teller, Schüssel, Becher, Tabletts oder Tücher oder Material aus nachwachsenden Rohstoffen handelt.

5. Verfahren nach einem der Ansprüche 1 bis 4, **dadurch gekennzeichnet, dass** das im Verfahren eingesetzte Einwegmaterial über einen organischen Kohlenstoffgehalt von mehr als 40 % verfügt.

6. Verfahren nach einem der Ansprüche 1 bis 5, **dadurch gekennzeichnet, dass** die Verpressung des fein zerkleinerten Materials durch Brikettierung oder Pelletierung erfolgt und dass es sich bei den erhaltenen Presslingen um Briketts oder Pellets handelt.

7. Verfahren nach einem der Ansprüche 1 bis 6, **dadurch gekennzeichnet, dass** vor der Grobzerkleinerung eine Entfernung von Störstoffen, vorzugsweise mittels Magnetabscheidung, erfolgt.

8. Verfahren nach einem der Ansprüche 1 bis 7, **dadurch gekennzeichnet, dass** Überschusswärme aus der Pyrolyse zur Trocknung des grob zerkleinerten Einwegmaterials eingesetzt wird.

9. Verfahren nach einem der Ansprüche 1 bis 8, **dadurch gekennzeichnet, dass** die nach der Pyrolyse erhaltene Pflanzenkohle durch Zugabe von Mikroorganismen biologisch aktiviert wird, um Pflanzennährstoffe, Spurenelemente, organische Säuren oder Vitamine zu mobilisieren und langfristig pflanzenverfügbar zu machen.

10. Verfahren nach einem der Ansprüche 1 bis 9, **dadurch gekennzeichnet, dass** die aus der Pyrolyse erhaltene Pflanzenkohle mit einer Nährstoff-haltigen Lösung beladen wird.

11. Anlage zur Herstellung von Pflanzenkohle aus mit Speiseresten behaftetem Einwegmaterial, das aus nachwachsenden Rohstoffen hergestellt wurde, umfassend
- einen Grobzerkleinerer (10) zur Aufnahme und Zerkleinerung von gesammeltem Einwegmaterial,
- eine Trocknungseinrichtung (30) zum Reduzieren des Feuchtigkeitsgehalts des zerkleinerten Einwegmaterials,
- einen Feinzerkleinerer (40) für das grob zerkleinerte und getrocknete Material zum Erhalt einer Korngröße von < 40 mm,
- eine Presseinrichtung (50) zur Erzeugung von Presslingen aus dem fein zerkleinerten Material,
- eine Karbonisierungseinrichtung (60) zur Erzeugung von Pflanzenkohle durch Pyrolyse.

12. Anlage nach Anspruch 11, **dadurch gekennzeichnet, dass** es sich bei der Presseinrichtung (50) um eine Brikettierpresse zur Herstellung von Briketts handelt.

13. Anlage nach Anspruch 11 oder 12, **dadurch gekennzeichnet, dass** nach der Presseinrichtung (50) eine Bigbag-Abfülleinrichtung (51) zur Bigbag-Abfüllung der Presslinge folgt.

14. Anlage nach Anspruch 11 oder 13, **dadurch gekennzeichnet, dass** der Grobzerkleinerer (10) über ein Förderband (3) bestückt wird, das mit einem Überbandmagneten zur Entfernung von metallischen Störstoffen ausgestattet ist.

15. Anlage nach einem der Ansprüche 11 bis 14, **dadurch gekennzeichnet, dass** es sich bei
- dem Grobzerkleinerer (10) um einen Zweiwellenzerkleinerer, und/oder
- der Trocknungseinrichtung (30) um einen Schubboden-Trocknungs-Container, und/oder
- dem Feinzerkleinerer (40) um einen Einwellenzerkleinerer mit Sieblöchern mit einem Durchmesser von < 40 mm, vorzugsweise < 15 mm, für das fein zerkleinerte Material, und/oder
- der Karbonisierungseinrichtung (60) um einen Drehrohrofen, Durchlaufreaktor oder Meiler handelt.

16. Anlage nach einem der Ansprüche 11 bis 15, **dadurch gekennzeichnet, dass** die Trocknungseinrichtung (30) einen Schubboden für den Materialtransport und einen Luftfilter umfasst.

17. Anlage zur Herstellung von Pflanzenkohle aus mit Speiseresten behaftetem Einwegmaterial, das aus nachwachsenden Rohstoffen hergestellt wurde, umfassend
- ein Biokonverter, der das Einwegmaterial zerkleinert und trocknet und in Fasermaterial umwandelt,
- eine Presseinrichtung (50) zur Erzeugung von Presslingen aus dem fein zerkleinerten Material,
- eine Karbonisierungseinrichtung (60) zur Erzeugung von Pflanzenkohle durch Pyrolyse, wobei der Biokonverter vor der Presseinrichtung (50) vorgesehen ist.
